# EUROPÄISCHE PATENTSCHRIFT

(11) **EP 1 589 238 B1**
(45) Veröffentlichungstag und Bekanntmachung des Hinweises auf die Patenterteilung: **18.03.2009**
(21) Anmeldenummer: 05007187.7
(22) Anmeldetag: 01.04.2005
(51) Int. Cl.: F16C 9/04, F16C 33/60

(54) **Verfahren zur Herstellung eines Bauteils mit einer bruchgetrennten Lageranordnung**
Method of producing a component with a split type bearing
Méthode de production d'un composant avec un dispositif de palier séparable par fracture

(30) Priorität: 20.04.2004 DE 102004018922
(43) Veröffentlichungstag der Anmeldung: 26.10.2005
(73) Patentinhaber: Bayerische Motoren Werke Aktiengesellschaft, 80809 München (DE)
(72) Erfinder: Luchner, Clemens, 83236 Übersee (DE); Pöllath, Helmut, 82223 Eichenau (DE); Gross, Thorsten, 80937 München (DE)

(56) Entgegenhaltungen:
- EP-A- 0 863 322
- WO-A-96/04485
- DE-A1- 10 102 641
- DE-A1- 19 617 402
- US-B1- 6 379 754

## Beschreibung

Die Erfindung betrifft ein Verfahren zur Herstellung eines Bauteils mit einer bruchgetrennten Lageranordnung, wobei in Vorbereitung zum Bruchtrennen eine oberflächennah und mittels in Reihe über Stege gegenseitig beabstandet angeordneter Vertiefungen ausgebildete Schwächungslinie angeordnet wird und das Bauteil, insbesondere bereichsweise, mit einer als Gleitlagerschicht dienenden Funktionsauflage versehen ist. Ein solches Verfahren ist z.B. in EP 0 863 322 offenbart.

Ein Verfahren zur Ausbildung einer Anrissstelle zum Bruchtrennen eines Bauteils ist mit der DE 196 17 402 A1 bekannt geworden, gemäß der bei einem bruchtrennbaren Pleuel für eine Brennkraftmaschine eine Anrissstelle im großen Pleuelauge mittels einer Reihe durch versprödete Stege voneinander getrennter Vertiefungen erzeugt ist, wobei erste Starterrisse zur Bruchauslösung von den Stegspitzen ausgehen. In sehr vorteilhafter Weise ermöglicht die DE 196 17 402 A1 bei einem mittels Bruchtrennen teilbaren Bauteil aus duktilem Metall die in einer Bruchtrennebene zur gezielten Bruchauslösung vorgesehenen Anrissstellen derart auszubilden, dass über die Länge der jeweiligen Anrissstelle gezielt verteilte Starterrisse erreicht sind.

Üblicherweise ist im Pleuelauge ein Lager aufgenommen, beispielsweise mit Vorspannung eingebaute, als Dünnwandlager, bestehend aus Stahlstützschale, Bleibronzeschicht und galvanischer Laufschicht, ausgeführte Pleuellagerschalen.

Um die bewegte Masse der Pleuelstange zu reduzieren und einen geringeren Durchmesser des Pleuelauges zu ermöglichen, schlägt die WO 96/04485 A1 vor, das im Pleuelauge erforderliche Lager beispielsweise durch eine Beschichtung der Innenfläche des Lagerauges zu bilden.

Wird ein bruchtrennbares oder bruchgetrenntes Bauteil zur Bildung einer Lagerstelle mit einer Beschichtung versehen, muss diese als Gleitlagerschicht dienende Funktionsauflage beim Öffnen der Lagerstelle im Bereich der Bruchtrennfläche gebrochen werden. Dabei hat sich jedoch gezeigt, dass beim Öffnen des Verbundes abhängig von Art und Beschaffung der Funktionsauflage die Gefahr besteht, dass diese in Form plastischer Verformung und/oder Rissbildung innerhalb der Funktionsauflage bzw. in der Anbindungszone zum Bauteilwerkstoff vorgeschädigt wird, was zum großflächigen Ablösen der Funktionsauflage und damit zum Versagen der Lageranordnung im Betrieb führen kann. Zudem ist eine prozesssichere und reproduzierbare Fertigung kaum möglich.

Aufgabe der Erfindung ist es, ein Verfahren bereitzustellen, welches unter Vermeidung der beschriebenen Nachteile die Herstellung eines eingangs genannten Bauteils ermöglicht. Insbesondere soll nachhaltig ein sicherer Betrieb des Bauteils gewährleistet sowie eine prozesssichere und reproduzierbare Fertigung ermöglicht werden.

Die Lösung der Aufgabe erfolgt mit den Merkmalen des Anspruchs 1, wobei gemäß der zugrundeliegenden Idee die Funktionsauflage im Bereich der Bruchtrennfuge zumindest bereichsweise eine verringerte Schichtdicke aufweist.

Besonders vorteilhafte Ausgestaltungen und Weiterbildungen des erfindungsgemäßen Verfahrens sind Gegenstand der Unteransprüche.

Sehr bevorzugt ist es, wenn die Funktionsauflage im Kantenbereich der Vertiefungen eine verringerte Schichtdicke aufweist. Zweckmäßigerweise sind hierzu zwischen der Bauteiloberfläche und den Vertiefungen scharfe Kanten gebildet. Die Stege zwischen den Vertiefungen werden vorteilhafterweise durch Verschneidung benachbarter, trichterförmiger Vertiefungen erzeugt und laufen spitz zu.

Vorzugsweise wird das Bauteil mit einer 5 bis 40 µm, insbesondere ca. 15 bis 25 µm, dicken Gleitlackschicht versehen, die Vertiefungen sind sacklochartig ausgebildet und weisen einen Durchmesser von 0,08 bis 0,4 mm, insbesondere von ca. 0,15 bis 0,25 mm, auf.

Das erfindungsgemäße Verfahren zeichnet sich dadurch aus, dass beim Öffnen der bruchgetrennten Lageranordnung die Funktionsschicht ausgehend von einem Bereich verringerter Schichtdicke bricht.

Besondere Vorteile ergeben sich bei einer Anwendung des Verfahrens zur Herstellung einer Pleuelstange für einen eine Kurbelwelle umfassenden Hubkolbenmotor mit einem der Kurbelwelle zugeordneten bruchtrennbaren Pleuelauge, wobei vom Pleuelfuß ein Pleuellagerdeckel trennbar ist und im Pleuelauge die Funktionsauflage durch Beschichtung zumindest der Innenfläche des Pleuelauges gebildet ist.

Nachfolgend ist die Erfindung anhand eines Ausführungsbeispiels unter Bezugnahme auf Figuren näher beschrieben, dabei zeigen schematisch und beispielhaft
- Figur 1: ein Bauteil mit einer bruchgetrennten Lageranordnung mit einer Vertiefungen umfassenden Schwächungslinie und einer als Gleitlagerschicht dienenden Funktionsauflage,
- Figur 2: ein Bauteil mit einer bruchgetrennten Lageranordnung mit einer oberflächennah und mittels in Reihe über Stege gegenseitig beabstandet angeordneter Vertiefungen ausgebildeter Schwächungslinie und einer als Gleitlagerschicht dienenden Funktionsauflage und
- Figur 3: ein Bauteil mit einer bruchgetrennten Lageranordnung mit einer oberflächennah und mittels in Reihe über Stege gegenseitig beabstandet angeordneter Vertiefungen ausgebildeter Schwächungslinie und einer als Gleitlagerschicht dienenden Funktionsauflage.

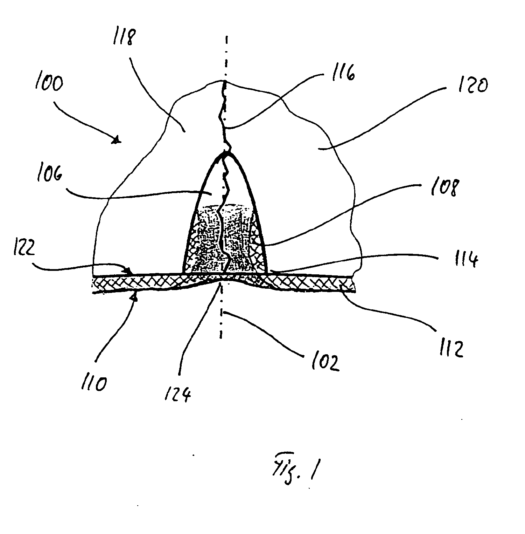

Figur 1 zeigt im Querschnitt ein in Teile 118, 120 getrenntes Bauteil 100. Beispielsweise handelt es sich bei dem Bauteil 100 um ein im Schmiede-, Sinter- oder Sinter-Schmiede-Verfahren aus Stahl oder Leichtmetall, wie Aluminium (Al) oder Titan (Ti) oder einer Stahl- oder Leichtmetall-Legierung oder aus einem Verbundwerkstoffe dessen Gefüge aus einer metallischen Legierung und einer gezielt eingebrachten Verstärkungskomponente besteht, wie Metal Matrix Composites (MMC), hergestelltes Pleuel für eine Hubkolbenbrennkraftmaschine mit einem bruchgetrennten großen Pleuelauge, wobei vom Pleuelfuß ein Pleuellagerdeckel getrennt ist.

Damit die Bruchtrennebene 116 exakt wie vorgesehen verläuft, ist im Bauteil 100 in Vorbereitung zum Bruchtrennen eine als Anrissstelle 102 ausgebildete Schwächungslinie angeordnet. Bei einem Pleuel sind Anrissstellen bohrungsinnenseitig diametral gegenüberliegend angeordnet.

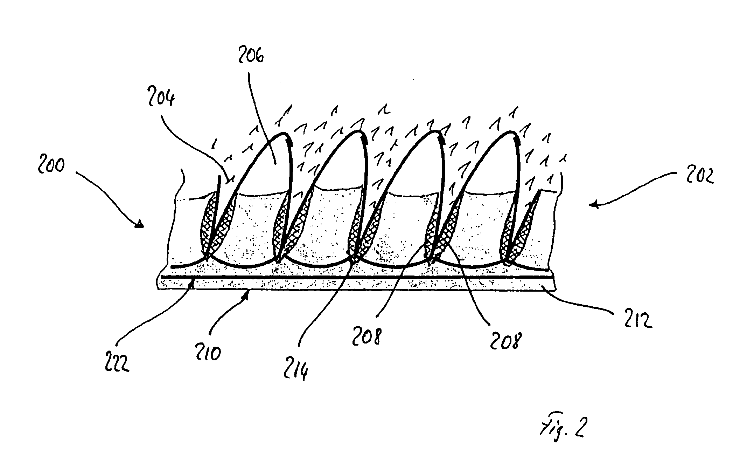

Einen Längsschnitt durch die Anrissstelle 202 im Bauteil 200 zeigt Figur 2. Oberflächennah und in Reihe sind über Stege 204 gegenseitig beabstandet angeordnete Vertiefungen 106, 206 ausgebildet. Die Stege 204 zwischen den Vertiefungen 106, 206 werden durch Verschneidung benachbarter, trichterförmiger Vertiefungen 106, 206 erzeugt und laufen spitz zu. Von Vorteil ist es dabei, wenn die Stegspitzen zumindest annähernd gleich nah an die Bauteiloberfläche 122, 222 heranreichen und/oder gegenüber der Bauteiloberfläche 122, 222 zurückgesetzt sind. Die Vertiefungen 106, 206 sind sacklochartig ausgebildet und weisen Durchmesser von 0,08 bis 0,4 mm, insbesondere von ca. 0,15 bis 0,25 mm, auf. Bevorzugt findet zur Ausbildung der trichterförmigen Vertiefungen 106, 206 der Anrissstelle 102, 202 ein gepulster Festkörper-Laser Verwendung. Bedingt durch den kleinen, lokal begrenzten Wärmeeintrag in das Bauteil 100, 200 werden gesteuert Härteschichten erzeugt, insbesondere sind die Spitzen der Stege 204 versprödet.

Vorliegend wird das Bauteil 100, 200 nach der vorbereitenden Einbringung der Anrissstelle 102, 202 bruchgetrennt, wobei das Bauteil entlang der Bruchtrennebene 116 in Teile 118, 120 bricht; Die Teile 118, 120 werden nach dem Bruchtrennen wieder zusammengefügt und fixiert. Handelt es sich bei dem Bauteil 100, 200 um eine Pleuel mit vom Pleuelfuß getrennten Pleuellagerdeckel, werden Pleuelfuß und Pleuellagerdeckel miteinander verschraubt. Optional kann sich eine mechanische (Fertig-)Bearbeitung des Bauteils 100, 200 anschließen.

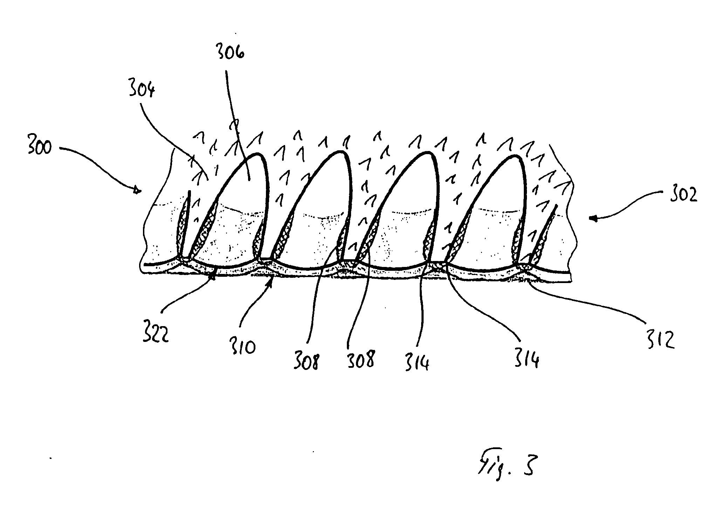

Ein derartiges, nach der Anordnung der Anrissstelle 302 bearbeitetes Bauteil 300 zeigt Figur 3 im Schnitt entlang der Anrissstelle 302. Im Rahmen dieser Bearbeitung ist die Bauteiloberfläche 322 soweit abgearbeitet, dass auch die Spitzen der Stege 304 entfernt sind und die Stege 304 im Bereich der Bauteiloberfläche 322 leicht abgeflacht enden. Da die Auslösung der Starterrisse beim Bruchtrennen maßgeblich von den spröden Spitzen der Stege 304 abhängig ist, erfolgt die Abflachung der Stege 304 zweckmäßigerweise erst nach dem Bruchtrennvorgang.

Im Folgenden wird das Bauteil 100, 200, 300 in zusammengefügtem und fixiertem Zustand mit einer als Gleitlagerschicht dienenden Funktionsauflage versehen. Vorliegend wird eine 5 bis 40 µm, insbesondere ca. 15 bis 25 µm, dicke Gleitlackschicht 110, 210, 310 aufgebracht. Bei einem Pleuel wird die Funktionsauflage insbesondere auf der Innenseite des großen Pleuelauges aufgebracht, wobei es durchaus auch zweckmäßig sein kann, zusätzlich das kleine Pleuelauge und/oder die seitlichen Anlaufflächen mit einer Funktionsauflage zu versehen.

In Vorbereitung zur Aufbringung der Gleitlackschicht 110, 210, 310 wird das Bauteil 100, 200, 300 nach dem Bruchtrennen zweckmäßigerweise gereinigt und/oder entfettet, gegebenenfalls gebeizt, sandgestrahlt, phosphatiert und/oder plasmaaktiviert und/oder vorgewärmt. Nach Aufbringung vernetzt die Gleitlackschicht 110, 210, 310, bzw. härtet aus, abhängig vom verwendeten Lack beispielsweise unter Wärmezufuhr an Luft.

Der Gleitlack bildet eine über die Fuge der Bruchtrennebene 116 hinweg gehende zusammenhängende Schicht 110, 210, 310, wobei die Schichtdicke aufgrund der Kantenwirkung in Verbindung mit der Oberflächenspannung des flüssig aufgebrachten Gleitlacks bei jeder Vertiefung 106, 206, 306 im Kantenbereich 114, 214, 314 geringer ist, als im Bereich 112, 212, 312 der ebenen Oberfläche; Am geringsten ist die Schichtdicke im Bereich 124 der Fuge der Bruchtrennebene 116. Als sehr günstig wird es angesehen, wenn die verringerte Schichtdicke, insbesondere im Bereich der Fuge der Bruchtrennebene 116 gegen Null geht. Bei Aufbringung läuft der Gleitlack teilweise in die Vertiefungen 106, 206, 306 und benetzt deren obere Randbereiche 108, 208, 308; Der Grund der Vertiefungen 106, 206, 306 wird nicht benetzt.

Beim Trennen der Teile 118, 120 des Bauteils 100, 200, 300, entsprechend einem Öffnen der bruchgetrennten Lageranordnung eines Pleuels, bricht die Gleitlackschicht 110, 210, 310 ausgehend von einem Bereich verringerter Schichtdicke 114, 214, 314, insbesondere ausgehend vom Bereich 124 der Fuge der Bruchtrennebene 116, wobei die Kanten der Stege 204, 304 zwischen den Vertiefungen 106, 206, 306 eine Kerbwirkung in der Gleitlackschicht 110, 210, 310 erzeugen. Die Gleitlackschicht 110, 210, 310 wird nur im Bereich der Stege 204, 304, im Bereich der geringsten Schichtdicke, gebrochen. Auf diese Weise wird eine Schädigung der Gleitlackschicht 110, 210, 310 wirksam vermieden und es wird eine hohe Funktionssicherheit gewährleistet. Besonderes vorteilhaft wird das erfindungsgemäße Verfahren bei einem Stahlpleuel, welches auf einer Guss- oder Stahlkurbelwelle läuft, angewendet, da eine Schädigung der Gleitlackschicht 110, 210, 310 bei dieser Werkstoffkombination aufgrund der hohen Fressneigung besonders nachteilig ist.

Im Ausführungsbeispiel wird die Gleitlackschicht 110, 210, 310 auf das bruchgetrennte, wieder zusammengefügte und fixierte Bauteil 100, 200, 300 aufgebracht. Gegebenenfalls kann es jedoch auch zweckmäßig sein, die Gleitlackschicht 110, 210, 310 bereits vor dem Bruchtrennen aufzubringen. Auch dann ergeben sich mit dem erfindungsgemäßen Verfahren Vorteile, es muss aber in besonderem Maß darauf geachtet werden, dass die Gleitlackschicht 110, 210, 310 während dem Bruchtrennen nicht beschädigt wird.

## Patentansprüche

1. Verfahren zur Herstellung eines Bauteils mit einer bruchgetrennten Lageranordnung, wobei
- in Vorbereitung zum Bruchtrennen eine oberflächennah und mittels in Reihe über Stege gegenseitig beabstandet angeordneter Vertiefungen ausgebildete Schwächungslinie angeordnet wird und
- das Bauteil, insbesondere bereichsweise, mit einer als Gleitlagerschicht dienenden Funktionsauflage versehen ist, **dadurch gekennzeichnet, dass** die Funktionsauflage (110, 210, 310) im Bereich (114, 124, 214, 314) der Bruchtrennfuge zumindest bereichsweise eine verringerte Schichtdicke aufweist.

2. Verfahren nach Anspruch 1, **dadurch gekennzeichnet, dass** die Funktionsauflage (110, 210, 310) im Kantenbereich (114, 214, 314) der Vertiefungen (106, 206, 306) eine verringerte Schichtdicke aufweist.

3. Verfahren nach Anspruch 1 oder 2, **dadurch gekennzeichnet, dass**, zwischen der Bauteiloberfläche (122, 222, 322) und den Vertiefungen (106, 206, 306) scharfe Kanten (114, 214, 314) gebildet sind.

4. Verfahren nach einem der vorhergehenden Ansprüche, **dadurch gekennzeichnet, dass** die Stege (204, 304) zwischen den Vertiefungen (106, 206, 306) durch Verschneidung benachbarter, trichterförmiger Vertiefungen (106, 206, 306) erzeugt werden und spitz zulaufen.

5. Verfahren nach einem der vorhergehenden Ansprüche, **dadurch gekennzeichnet, dass** das Bauteil (100, 200, 300) mit einer 5 bis 40 µm, insbesondere ca. 15 bis 25 µm, dicken Gleitlackschicht (110, 210, 310) versehen wird.

6. Verfahren nach einem der vorhergehenden Ansprüche, **dadurch gekennzeichnet, dass** die Vertiefungen (106, 206, 306) sacklochartig ausgebildet sind und einen Durchmesser von 0,08 bis 0,4 mm, insbesondere von ca. 0,15 bis 0,25 mm, aufweisen.

7. Verfahren nach einem der vorhergehenden Ansprüche, **dadurch gekennzeichnet, dass** beim Öffnen der bruchgetrennten Lageranordnung die Funktionsschicht (110, 210, 310) ausgehend von einem Bereich (114, 124, 214, 314) verringerter Schichtdicke bricht.

8. Verfahren nach einem der vorhergehenden Ansprüche, **dadurch gekennzeichnet, dass** das Bauteil (100, 200, 300) eine Pleuelstange für einen eine Kurbelwelle umfassenden Hubkolbenmotor mit einem der Kurbelwelle zugeordneten bruchtrennbaren Pleuelauge ist, wobei vom Pleuelfuß ein Pleuellagerdeckel trennbar ist und im Pleuelauge die Funktionsauflage (110, 210, 310) durch Beschichtung zumindest der Innenfläche des Pleuelauges gebildet ist.

## Claims

1. A method of producing a component having a bearing arrangement separated by fracturing, wherein
- prior to the fracturing process, a weakening line in the form of a row of shallow recesses separated from one another by webs is formed and
- the component, or especially parts of it, is provided with a functional coating of use as a sliding bearing layer,
**characterised in that** the functional coating (110, 210, 310) has a reduced thickness, at least in places, in the region (114, 124, 214, 314) of the parting surface.

2. A method according to claim 1, **characterised in that** the functional coating (110, 210, 310) has a reduced thickness in the edge region (114, 214, 314) of the recesses (106, 206, 306).

3. A method according to claim 1 or claim 2, **characterised in that** sharp edges (114, 214, 314) are formed between the recesses (106, 206, 306) and the surface (122, 222, 322) of the component.

4. A method according to any of the preceding claims, **characterised in that** the webs (204, 304) between the recesses (106, 206, 306) are made by cutting of neighbouring funnel-shaped recesses (106, 206, 306) and end in a point.

5. A method according to any of the preceding claims, **characterised in that** the component (100, 200, 300) is given a friction paint layer (110, 210, 310) having a thickness of 5 to 40 µm, especially about 15 to 25 µm.

6. A method according to any of the preceding claims, **characterised in that** the recesses (106, 206, 306) are blind bores and have a diameter of 0.08 to 0.4 mm, especially from about 0.15 to 0.25 mm.

7. A method according to any of the preceding claims, **characterised in that** when the fractured bearing arrangement is opened, the functional layer (110, 210, 310) breaks, starting from a reduced-thickness region (114, 124, 214, 314).

8. A method according to any of the preceding claims, **characterised in that** the component (100, 200, 300) is a connecting rod for a reciprocating engine comprising at crankshaft with a connecting-rod eyelet separated by fracturing and associated with the crankshaft, wherein a connecting-rod bearing cover is separable from the connecting-rod foot and the functional coating (110, 210, 310) is made in the eyelet by coating at least the inner surface of the eyelet.

## Revendications

1. Procédé de fabrication d'une pièce comportant un dispositif de palier séparé par rupture,
selon lequel
- en préparation de la séparation par rupture, on prévoit une ligne d'affaiblissement proche de la surface supérieure et réalisée avec une série de cavités réparties de façon écartée les unes des autres par des entretoises, et
- on munit la pièce en particulier suivant des zones, d'une couche de palier lisse servant d'appui fonctionnel,
**caractérisé en ce que**
l'appui fonctionnel (110, 210, 310) présente au moins par zone une épaisseur de couche réduite dans la zone (114, 124, 214, 314) du joint de séparation par rupture.

2. Procédé selon la revendication 1,
**caractérisé en ce que**
l'appui fonctionnel (110, 210, 310) présente une épaisseur de couche réduite dans la zone d'arête (114, 214, 314) des cavités (106, 206, 306).

3. Procédé selon la revendication 1 ou 2,
**caractérisé en ce que**
des arêtes vives (114, 214, 314) sont formées entre la surface supérieure de la pièce (122, 222, 322) et les cavités (106, 206, 306).

4. Procédé selon les revendications précédentes,
**caractérisé en ce qu'**
on réalise des entretoises (204, 304) entre les cavités (106, 206, 306) par l'intersection de cavités voisines (106, 206, 306) en forme d'entonnoir et qui se rejoignent en pointe.

5. Procédé selon les revendications précédentes,
**caractérisé en ce qu'**
on munit la pièce (100, 200, 300) d'une couche de vernis de glissement (110, 210, 310) d'une épaisseur de 5 µm à 40 µm et notamment d'environ 15 µm à 25 µm.

6. Procédé selon les revendications précédentes,
**caractérisé en ce que**
les cavités (106, 206, 306) ont une forme de trou borgne et elles ont un diamètre de 0,08 mm à 0,4 mm notamment d'environ 0,15 mm à 0,25 mm.

7. Procédé selon les revendications précédentes,
**caractérisé en ce qu'**
en ouvrant le dispositif de palier séparé par rupture, la couche fonctionnelle (110, 210, 310) d'épaisseur de couche diminuée se casse en partant d'une zone d'épaisseur réduite (114, 124, 214, 314).

8. Procédé selon les revendications précédentes,
**caractérisé en ce que**
la pièce (100, 200, 300) est une bielle pour un moteur à pistons linéaires à vilebrequin, ayant une bielle séparable pour rupture, associée au vilebrequin, on sépare un chapeau de palier de bielle du pied de bielle et on réalise dans l'oeil de la bielle, l'appui fonctionnel (110, 210, 310) par un revêtement appliqué au moins sur la surface intérieure de l'oeil de bielle.
